# EUROPEAN PATENT SPECIFICATION

(11) **EP 3 133 610 B1**
(45) Date of publication and mention of the grant of the patent: **09.10.2019**
(21) Application number: 15780420.4
(22) Date of filing: 17.04.2015
(51) Int. Cl.: G21C 19/105, G21C 19/10, G21C 1/02, G21C 15/247, G21C 19/19, G21C 19/20

(54) **METHOD OF EXTRACTING PLUG AND REMOVABLE UNIT WHEN REFUELING NUCLEAR REACTOR**
VERFAHREN ZUR EXTRAKTION EINES STOPFENS UND ENTFERNBARE EINHEIT BEI DER NEUBESTÜCKUNG EINES KERNREAKTORS
PROCÉDÉ DE RETRAIT D'UN BOUCHON ET D'UN BLOC EXTRACTIBLE LORS DU RECHARGEMENT D'UN RÉACTEUR NUCLÉAIRE

(30) Priority: 18.04.2014 RU 2014115600
(43) Date of publication of application: 22.02.2017
(73) Proprietor: Joint Stock Company "Akme-Engineering", Moscow 115035 (RU)
(72) Inventor: VASIL'YEV, Nikolay Dmitrievich, St.Petersburg 195297 (RU); OGURTSOV, Vladimir Evgen'yevich, St.Petersburg 195256 (RU); KUZNETSOV, Alexandr Ivanovich, St.Petersburg 193253 (RU)
(74) Representative: Balder IP Law, S.L.
(86) International application number: PCT/RU2015/000250
(87) International publication number: WO 2015/160285

(56) References cited:
- JP-A- H01 116 495
- JP-A- H01 313 796
- JP-A- H04 353 798
- RU-A- 2008 144 275

## Description

The invention relates to nuclear engineering, in particular to the method of the plug and the removable block extraction from a fast reactor with a heavy liquid metal coolant.

After withdrawal of the reactor monoblock from operation to reload the reactor core elements with heavy liquid metal coolant, it is required, with due account for the nuclear and radiation safety conditions, to carry out process operations for extraction of the plug (with a purpose of its subsequent use as intended) into the shaft of the plug, as well as of the removable block (after the spent fuel assemblies were unloaded) into a shaft for removable block dismantling for further disposal. The process of the plug and the removable block extraction without spent fuel assemblies (SFA) is characterized by the fact that the process takes place under the influence of considerable buoyancy of the heavy liquid metal coolant due to its high density exceeding that of the material (steel) used in the extraction equipment and devices. It is necessary to consider the effects of high temperatures of the heavy liquid metal coolant and a high degree of radioactive contamination of the extracted equipment.

A method of plug removal (extraction) is known, which is specified in the description to patent RU 2166808, C1 G21C19/105, published on 5/10/2001, involving plug removal from the coolant flowmeter in the nuclear reactor fuel channels by a plug removing mechanism.

JPH04353798 discloses a method of reloading a liquid metal cooled reactor wherein a hood and a plug transportation device are installed on the reactor's cover. The plug transportation device and the plug are moved into the hood.

A container for unloading the removable block with or without a core is known (patent RU 2399972, C2 G21C19/10, G21F5/08, F16K7/18, published on 20.00.2010). The method of the removable reactor block unloading, as described in the specification for the known container, involves extracting of the removable block into a container using a pulling hoist with an automatic grip.

The disadvantage of this method is impossibility to control fixation devices for the removable block.

The prototype of the invention may be a known method of fast nuclear reactor reloading and reload system (patent RU 2224307, C2 G21C19/00, G21C19/10, published on 2/20/2004), which consists in carrying out spent fuel assemblies reloading operations using a direct removal refueling machine.

However, this method prevents extraction of the plug or removable block of a fast reactor.

Considering the fact that low power reactor plants, in particular, such as LBFR (lead-bismuth fast reactor), with fast reactors cooled by liquid metal lead-bismuth coolant using a modular principle of the power unit construction are the pilot ones in the part of implementation of large-scale high-tech projects in the nuclear industry, the analogues of the plug and removable block extraction method during reloading (refueling) of nuclear reactors of such a type and of the same purpose, technical essence and achieved result have not been identified by the authors and the applicant.

The basis of the invention is the objective to perform all process operations without degradation of the radiation situation as to the plug and removable block extraction (without SFA).

To solve this problem a method has been provided for extracting plug and removable block (without SFA) during nuclear reactor reloading using a handling equipment set, including installation of handling equipment when preparing for the plug and removable block unloading, extraction of the plug from the reactor monoblock, transportation and placement of the plug in a plug shaft, unloading of the removable block (without SFA) remaining in the reactor monoblock, its transportation and placement in the shaft for the removable block dismantling.

The present invention provides a method according to the subject-matter of claim 1. Additional features are defined by the dependent claims.

Technical results of the inventive method are as follows, in particular:
- control capabilities for devices fixing the plug and removable block;
- ensuring the safety of operations by creating an unloading path with the help of a handling equipment set, as well as due to the fact that the gas-air mixture of the handling equipment internal cavities is removed into a special ventilation with controlled gas environment, and the cavities themselves are filled with inert gas;
- reducing the amount of equipment needed for the extraction and transportation, and reducing the time of auxiliary operations on installation, alignment and removal from each position of each special process equipment by using general handling equipment for the plug and the removable block extraction (cable reduction box, guide channel and reloading armor);
- elimination of the possibility of the RMB lead-bismuth coolant contact with atmospheric air in the room;
- ensuring the possibility of the handling equipment inner cavities filling with inert gas;
- restraining from surfacing and provision of the reactor plug breakaway when the additional cargo is removed;
- ensuring the plug movement without distortions;
- ensuring operational safety for the operating personnel when dismantling the removable unit;
- excluding the possibility of plug turning around its axis;
- providing vertical position of the plug during transportation and process operations (plug balancing);
- maintaining the plug orientation during discharge relative to the reactor axis;
- maintaining the removable block orientation during discharge relative to the reactor axis.

The following features of the claimed invention have an influence on the abovementioned technical results.

Installation of handling equipment during preparation for unloading is carried out as follows: The device for plug transportation is installed and fixed on the reactor plug; then additional load is installed and secured onto the plug transportation device; the pressure flange is disassembled; the inner frame part of the cable reduction box is installed onto the cover of the reactor monoblock (RMB) and secured, the middle part of the plug transportation device is turned into a position where its projections will enter the operating area of the fixing element of the cable reduction box inner part, the additional cargo is dismantled, the cable reduction box outer part is installed onto the RMB and the cavity of the cable reduction box is checked for tightness with overpressure, then gas-air mixture is removed from the cable reduction box cavity into the ventilation under the gaseous medium monitoring, and then the cavity of the adapter is filled with inert gas.

The plug is removed from the RMB as follows: A guide channel is installed onto the cable reduction box, at the same time, the tightness between the guide channel and the box is provided using a sealing element. On the upper support surface of the guide channel fixed on the ceiling of the reactor shop central hall, a reloading armor is installed; tightness of the reloading armor and guide channel cavities is checked with overpressure, gas-air mixture is removed from the reloading armor and guide channel cavities into the ventilation while monitoring the gas medium and then the reloading armor and guide channel cavities are filled with inert gas; the plug transportation device with a plug is moved into the upper position using a movement drive of the cable reduction box fixing element, automatic grip of the reloading armor is lowered until it is interlocked with a plug transportation device and the automatic grip of reloading armor with the plug is moved into the highest position; the reloading armor and cable reduction box dampers are closed and sealed.

The reloading armor with the plug is further transported into the plug shaft and the plug is unloaded using a cargo crane and a lifting beam, and then the reloading armor is transported to its place of storage and the guide channel is dismantled.

Unloading of removable block (without SFA) remaining in the RMB is carried out as follows: the guide channel is re-installed onto the cable reduction box, on the upper support surface of the guide channel fixed on the ceiling of the reactor shop central hall; the reloading armor is installed together with a removable block transportation device; tightness of the reloading armor and guide channel cavities is checked with overpressure; gas-air mixture is removed from the reloading armor and guide channel cavities into the ventilation while monitoring the gas environment; cavities of the reloading armor and guide channel are filled with inert gas; reloading armor automatic grip is lowered until it interlocks with the removable block; the reloading armor automatic grip with the removable block is moved into its highest position; and then the cable reduction box and reloading armor dampers are closed and sealed.

Then the reloading armor loaded with the removable block (without SFA) is transported into the shaft for the removable block dismantling, the removable block is unloaded into the shaft and the reloading armor is transported to its place of storage.

The invention is illustrated at the following drawings provided in Figures 1 - 3:
- Fig. 1 -: preparation for unloading
- Fig. 2 -: plug unloading;
- Fig. 3 -: removable block unloading (without SFA).

To remove the plug and the removable block of the nuclear reactor, a set of handling equipment is used consisting of the following: 1 - cable reduction box, 2 - additional cargo, 3 - guide channel, 4 - reloading armor, 5 - plug transportation devices, 6 - removable block transportation devices, as well as a set of lifting beams and automated system of handling equipment machinery management.

Cable reduction box 1 is intended for installation of handling equipment and provides its coupling with the RMB housing 7, as well as operating personnel radiation protection.

Additional cargo 2 prevents surfacing of the reactor plug 8 when the pressure flange is removed, the former keeping the plug in the housing 7 of the RMB when in operation.

Guide channel 3 which is a tube with a supporting flange having flanges for connection to the special ventilation stationary system, is designed to create the unloading path for the plug and the removable block, to place control devices, as well as to direct and position the reloading armor grip as it moves outside of the armor.

Reloading armor 4, which is a vertical cylindrical vessel having heat insulation and biological protection made of lead (opposite to the core), equipped with a pulling hoist with an automatic grip 9, providing for automatic engagement and disengagement with the head of plug 5 and removable block 6 transportation devices.

To move the plug 8 of the reactor, the plug transportation device 5 is used, and to move the removable reactor block 10, the removable block transportation device 6 is used.

The use of the plug transportation device (PTD) 5 provides for the following: engagement and fixation of the reloading armor 4 with the automatic grip 9, the possibility to move the plug 8 along the unloading path into the reloading armor 4, the possibility of fixing and releasing the additional cargo 2 and the possibility of the plug breakaway 8 during unloading.

Usage of the removable block transportation device (RBTD) 6 provides for the following: engagement and fixation of the reloading armor 4 with the automatic grip 9, the possibility to move the removable block 10 along the unloading path to the removable armor 4, the control over fastening or unfastening of the removable block 10 in the RMB shaft and pressing in or breakaway of the removable block 10 to overcome the buoyancy applied to it.

A set of lifting beams (not shown) provides for the transportation of the handling equipment set devices using, for example, an electric bridge crane.

The automated control system (ACS) (not shown) of the handling equipment mechanisms provides for the collection, processing, monitoring, reporting of information on the situation and status of the executive bodies, operating influences on electric motor drives of the handling equipment set, registration of the information on the process of the reactor plant unloading. The ACS performs its function when the plug 8 is lifted and when the removable block 10 of the reactor is removed.

The proposed method is carried out in the following sequence.

Initial state:
- the top protection of the reactor is dismantled;
- electric drives of the main circulation pump (MCP) and drives of the control and protection systems (CPS) are dismantled.

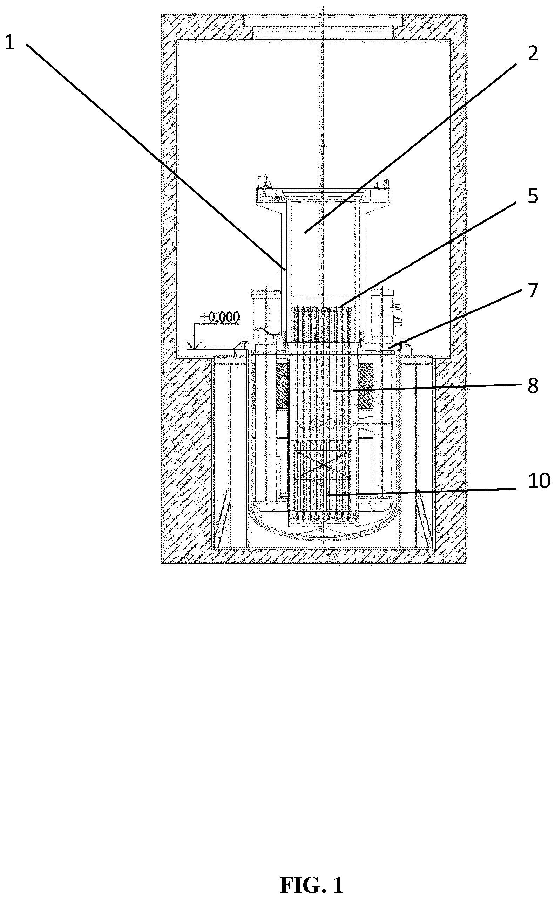

First, the following preparatory works are performed on a stopped reactor monoblock for the handling equipment installation (Fig. 1).

Using a cargo crane and a lifting beam, PTD 5 is installed onto the plug 8 and secured with screws from the service platform. Additional cargo 2 is mounted onto the upper end of the of PTD 5 using a cargo crane and a lifting beam. Pressure flange (not shown) is detached and disassembled using a device designed for unscrewing (screwing) of the pressing flange nuts. Using a cargo crane and a lifting beam, the inner frame of the cable reduction box 1 is installed and fixed onto the RMB housing 7 with fastening screws. Using a special tool (wrench), the supporting ring (the middle turning part of the PTD) is turned into a position where its projections enter the operating area of the cable reduction box locking element located on the lead screws of the cable reduction box 1. With the use of a cargo crane and a lifting beam, additional cargo 2 is removed. Using a cargo crane and a lifting beam, the external part of the cable reduction box 1 is mounted with a closed and sealed damper on the RMB housing 7. The internal cavity of the cable reduction box 1 is checked for leaks with overpressure. The internal medium of the cable reduction box cavity 1 is replaced: inert gas instead of air medium.

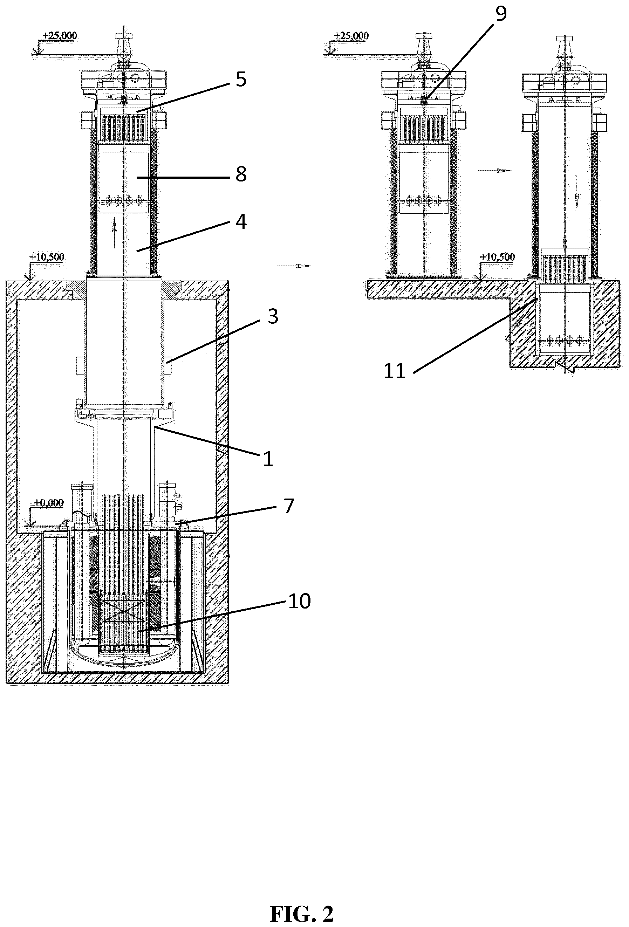

Removal of the plug from the RMB (Fig. 2).

Using a cargo crane and a lifting beam, the guide channel 3 is installed on the cable reduction box, the upper bearing surface of the guide channel is fixed on the ceiling of the reactor shop central hall. The tightness between the guide channel 3 and the cable reduction box 1 is provided using a sealing element (not shown). Reloading armor 4 is installed on the upper bearing surface of the guide channel 3 using a cargo crane. A transition piece (not shown) is fixed onto the automatic grip 9 of the reloading armor 4 in advance for docking with PTD 5. The damper of the reloading armor 4 is decompressed and opened. The internal cavity of the reloading armor 4 and the guide channel 3 is checked for leaks with overpressure. The internal medium of the reloading armor and guide channel 4 cavities is replaced: inert gas instead of air medium. The gate of the cable reduction box 1 is decompressed and opened. The movement drive of the locking element of the cable reduction box 1 is turned on and the PTD 5 is moved together with the plug 8 in its upper position where the upper limiting elements of the cable reduction box fixing member are automatically removed from the projections of the supporting ring, and the buoyancy acting on the plug is equal to zero. The grip of the reloading armor 4 is lowered into the lowest position until it stops against the stop member of the guide channel 3; control drives located on the moving line of the guide channel 3 are connected to the automatic grip 9 and the latter is interlocked with the PTD 5. Control drives of the grip and the clutch are disconnected, the automatic grip 9 coupled with the PTD 5 is lifted by 100 ÷ 200 mm upwards. At the same time, the stops of the fixing member of the cable reduction box are removed from the PTD 5 supporting ring. The automatic grip 9 of the reloading armor 4 with a plug 8 is moved into the highest position; the dampers of the cable reduction box 1 and reloading armor 4 are closed and sealed. Reloading armor 4 with a plug 8 are transported into the plug shaft 11, and the shaft is unloaded by decompressing and opening the damper as well as lowering the automatic grip 9 to the lower position.

Inside the plug shaft 11, similar control drives for managing the automatic grip 9 removal are arranged as well as the drives for the PTD 5 disengagement. The automatic grip 9 with a transition element is lifted to the uppermost position; the damper is closed and sealed, and the reloading armor 4 is transported to its place of storage. The guide channel 3 is dismantled.

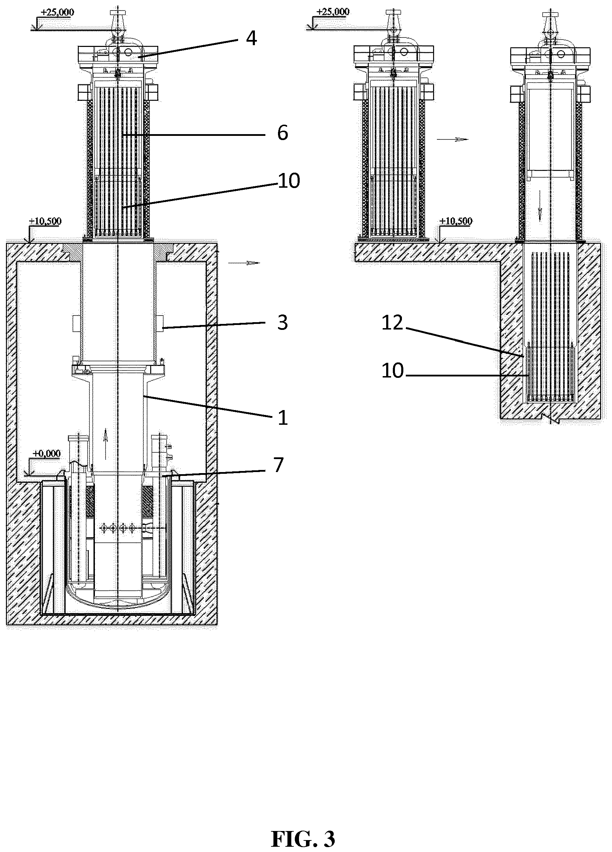

Then, the removable unit 10 (without SFA) is unloaded from the RMB (Fig. 3).

Initial state:
- The cable reduction box 1 damper is closed and sealed;
- plug 8 of the reactor is unloaded;
- the SFA are unloaded form the removable block 10;

The guide channel 3 is re-installed on the cable reduction box using a cargo crane and a lifting beam, the upper bearing surface of the guide channel is fixed on the ceiling of the reactor shop central hall. The tightness between the guide channel 3 and the cable reduction box 1 is ensured by a sealing element. Reloading armor 4 is installed on the upper bearing surface of the guide channel 3 using a cargo crane. The RMTD 6 is preliminarily fixed onto the automatic grip 9 of the reloading armor 4. The damper of the reloading armor 4 is decompressed and opened. The internal cavity of the reloading armor 4 and the guide channel 3 is checked for leaks with overpressure. The internal medium of the cable reduction box 1 and reloading armor 4 cavities is replaced by means of replacing air with inert gas. The gate of the cable reduction box 1 is decompressed and opened. The automatic grip 9 of the reloading armor 4 is moved into its lowest position until it stops against a limiting element of the guide channel 3; the drive control (located on the moving line of the channel guide 3) is connected to the automatic grip 9 and the latter is interlocked with the removable block 10. Using the drive located on the moving line of the guide channel 3, the interlocks of the removable block 10 are opened by turning the appropriate rotating pins. The control drive of the automatic grip 9 is disconnected from the RMTD 6, and the automatic grip 9 of the reloading armor 4 with the removable block 10 are moved into the uppermost position; the cable reduction box 1 and reloading armor 4 dampers are closed and sealed. Reloading armor 4 is transported together with the removable block 10 to the shaft for the removable block 12 disassembly, unloaded into the shaft, then the damper is decompressed and opened, moving the grip to the lower position. The automatic grip 9 with the RBTD 6 is moved up into the uppermost position, the damper is closed and sealed and the reloading armor 4 is transported to its place of storage. The removable block 10 does not have tight-fitting seats, unlike the plug 8, so when the rotary locks are turned around, buoyancy and extra effort by pulling hoist of the reloading armor 4 is enough to unload it from the RMB.

Above the plug shaft 11 and the shaft for the removable block disassembly 12, grip disengaging control drives as well as drives for disengaging of the PTD 5 and PTD 6 are arranged.

After full completion of unloading operations, the inner surface and the seats of the central RMB shell are inspected.

The claimed inventive method allows to carry out all process operations related to the plug and removable block extraction (without SFA) by means of a set of handling equipment and transportation devices providing a reliable biological protection for personnel and equipment.

## Claims

1. A method of extracting a plug (8) and a removable block (10) during reloading of a nuclear reactor with a heavy liquid metal coolant, comprising:
installing a plug transportation device (5) having a supporting ring with projections on the plug (8),
installing an additional cargo (2) on the plug transportation device (5),
installing and fixing an inner frame of a cable reduction box (1) having fastening screws on a cover of a reactor monoblock,
turning the supporting ring of the plug transportation device (5) to a position where the projections enter an operating area of the fastening screws of the cable reduction box (1),
dismantling the additional cargo (2),
installing an external part of the cable reduction box (1) on the reactor monoblock,
replacing an internal medium of an internal cavity of the cable reduction box (1),
installing a guide channel (3) on the cable reduction box (1),
installing a reloading armor (4) having dampers on the guide channel (3),
replacing the internal medium of the reloading armor (4) and the guide channel (3),
moving the plug transportation device (5) with the plug (8) into the reloading armor (4),
transporting the reloading armor (4) with the plug (8) into a plug shaft (11) where the plug (8) is unloaded,
re-installing the guide channel (3) on the cable reduction box (1),
installing the reloading armor (4) with a removable block transportation device (6) on the guide channel (3),
replacing the internal medium of the internal cavity of the cable reduction box (1) and an internal cavity of the reloading armor (4),
lowering an automatic grip (9) of the reloading armor (4) to coupling with the removable block (10),
moving the removable block transportation device (6) with the removable block (10) to the highest position in the reloading armor (4),
transporting the reloading armor (4) with the removable block (10) to a shaft (12) for removable block disassembly, and
unloading the removable block (10).

2. The method of claim 1, further comprising dismantling a pressure flange after installing and fixing the additional cargo (2) on the plug transportation device (5).

3. The method of claim 1, further comprising providing sealing between the guide channel (3) and the cable reduction box (1) by a sealing member.

4. The method of claim 1, wherein replacing of the internal medium of the internal cavity of the cable reduction box (1) is carried out by checking tightness of the internal cavity of the cable reduction box (1) with overpressure, followed by removing a gas-air mixture from the internal cavity of the cable reduction box (1) into a ventilation with controlling of a gaseous medium, and then filling the internal cavity of the cable reduction box (1) with an inert gas.

5. The method of claim 1, wherein the reloading armor (4) is being installed on an upper support surface of the guide channel (3) fixed on a ceiling of a central hall of a reactor shop.

6. The method of claim 1, wherein replacing of the internal medium of the reloading armor (4) and the guide channel (3) is being carried out by checking tightness of the internal cavity of the reloading armor (4) and a cavity of the guide channel (3) with overpressure, followed by removing a gas-air mixture from the cavity of the reloading armor (4) and the cavity of the guide channel (3) into a ventilation with controlling a gaseous medium, and then filling the cavity of the reloading armor (4) and the cavity of the guide channel (3) with an inert gas.

7. The method of claim 1, wherein moving of the plug transportation device (5) together with the plug (8) into the reloading armor (4) is being carried out by moving the plug transportation device (5) together with the plug (8) to an upper position by a movement drive of the fastening screws of the cable reduction box (1), followed by lowering the automatic grip (9) of the reloading armor (4) and carrying out coupling of the automatic grip (9) of the reloading armor (4) with the plug transportation device (5), moving the automatic grip (9) of the reloading armor (4) together with the plug (8) into the highest position, and closing and sealing the dampers of the reloading armor (4) and the cable reduction box (1).

8. The method of claim 7, wherein lowering the automatic grip (9) of the reloading armor (4) is until it stops against a limiting element of the guide channel (3).

9. The method of claim 1, wherein transportation of the reloading armor (4) with the plug (8) to the plug shaft (11) and unloading of the plug (8) is carried out by a cargo crane and a lifting beam.

10. The method of claim 1, wherein, after transporting the reloading armor (4) with the plug (8) to the plug shaft (11) and unloading the plug (8), the reloading armor (4) is being transported to a place of storage thereof, and the guide channel (3) is being removed.

11. The method of claim 1, wherein, after moving the automatic grip (9) of the reloading armor (4) together with the removable block (10) to the highest position thereof in the reloading armor (4), the cable reduction box (1) and the dampers of the reloading armor (4) are being closed and sealed.

## Patentansprüche

1. Ein Verfahren zum Herausziehen eines Steckers (8) und eines abnehmbaren Blocks (10) während des Nachladens eines Kernreaktors mit einem flüssigen Schwermetallkühlmittel, umfassend:
Installieren einer Steckertransportvorrichtung (5) mit einem Stützring mit Vorsprüngen am Stecker (8),
Anbringen einer Zusatzladung (2) an der Steckertransportvorrichtung (5),
Anbringen und Befestigen eines Innenrahmens eines Kabelreduzierungskastens (1) mit Befestigungsschrauben an einem Deckel eines Reaktor-Monoblocks,
Drehen des Stützrings der Steckertransportvorrichtung (5) in eine Position, in der die Projektionen in einen Arbeitsbereich der Befestigungsschrauben des Kabelreduzierungskastens (1) eintreten,
Demontage der Zusatzladung (2),
Installieren eines externen Teils des Kabelreduzierungskastens (1) auf dem Reaktor-Monoblock,
Ersetzen eines inneren Mediums eines inneren Hohlraums des Kabelreduzierungskastens (1),
Installieren eines Führungskanals (3) an dem Kabelreduzierungskasten (1),
Installieren einer Nachladepanzerung (4) mit Dämpfern am Führungskanal (3),
Ersetzen des inneren Mediums der Nachladepanzerung (4) und des Führungskanals (3),
Bewegen der Steckertransportvorrichtung (5) mit dem Stecker (8) in die Nachladepanzerung (4),
Transport der Nachladepanzerung (4) mit dem Stecker (8) in einen Steckerschaft (11) wo der Stecker (8) entladen wird,
Wieder-Installieren des Führungskanals (3) in den Kabelreduzierungskasten (1),
Installieren der Nachladepanzerung (4) mit einer Transportvorrichtung des abnehmbaren Blocks (6) auf dem Führungskanal (3),
Ersetzen des inneren Mediums des inneren Hohlraums des Kabelreduzierungskastens (1) und einen inneren Hohlraum der Nachladepanzerung (4),
Absenken eines automatischen Griffs (9) der Nachladepanzerung (4) zur Kupplung mit dem abnehmbaren Block (10),
Bewegen der Transportvorrichtung des abnehmbaren Blocks (6) mit dem abnehmbaren Block (10) auf die höchste Position in der Nachladepanzerung (4),
Transport der Nachladepanzerung (4) mit dem abnehmbaren Block (10) zu einem Schaft (12) zur Demontage von abnehmbaren Blöcken und
Entladen des abnehmbaren Blocks (10).

2. Das Verfahren nach Anspruch 1, ferner umfassend den Abbau eines Druckflansches nach Montage und Befestigung der Zusatzladung (2) an der Steckertransportvorrichtung (5).

3. Das Verfahren nach Anspruch 1, ferner umfassend das Bereitstellen einer Abdichtung zwischen dem Führungskanal (3) und dem Kabelreduzierungskasten (1) durch ein Dichtungselement.

4. Das Verfahren nach Anspruch 1, wobei das Ersetzen des inneren Mediums des inneren Hohlraums des Kabelreduzierungskastens (1) durch Kontrolle der Dichtheit des inneren Hohlraums des Kabelreduzierungskastens (1) bei Überdruck, gefolgt von Entfernung eines Gas-Luft-Gemisches aus dem inneren Hohlraum des Kabelreduzierungskastens (1) in eine Belüftung mit Steuerung eines gasförmigen Mediums und dann Füllen des inneren Hohlraums des Kabelreduzierungskastens (1) mit einem Inertgas ausgeführt wird.

5. Das Verfahren nach Anspruch 1, wobei die Nachladepanzerung (4) auf einer oberen Auflagefläche des Führungskanals (3) montiert an einer Decke von einer zentralen Halle einer Reaktorwerkstatt installiert ist.

6. Das Verfahren nach Anspruch 1, wobei das Ersetzen des inneren Mediums der Nachladepanzerung (4) und des Führungskanals (3) durch Kontrolle der Dichtheit des inneren Hohlraums der Nachladepanzerung (4) und eines Hohlraums des Führungskanals (3) bei Überdruck, gefolgt von Entfernung eines Gas-Luft-Gemisches aus dem Hohlraum der Nachladepanzerung (4) und dem Hohlraum des Führungskanals (3) in eine Belüftung mit Steuerung eines gasförmigen Mediums und dann Füllen des Hohlraums der Nachladepanzerung (4) und dem Hohlraum des Führungskanals (3) mit einem Inertgas ausgeführt wird.

7. Das Verfahren nach Anspruch 1, wobei das Bewegen der Steckertransportvorrichtung (5) zusammen mit dem Stecker (8) in die Nachladepanzerung (4) durch das Bewegen der Steckertransportvorrichtung (5) zusammen mit dem Stecker (8) auf eine obere Position durch einen Bewegungsantrieb der Befestigungsschrauben des Kabelreduzierungskastens (1), gefolgt vom Absenken des automatischen Griffs (9) der Nachladepanzerung (4) und dem Ausführen des Koppelns des automatischen Griffs (9) der Nachladepanzerung (4) mit der Steckertransportvorrichtung (5), des Bewegens des automatischen Griffs (9) der Nachladepanzerung (4) zusammen mit dem Stecker (8) in die höchste Position und Schließen und Abdichten der Dämpfer der Nachladepanzerung (4) und des Kabelreduzierungskastens (1) ausgeführt wird.

8. Das Verfahren nach Anspruch 7, wobei das Absenken des automatischen Griffs (9) der Nachladepanzerung (4) bis zum Anschlag gegen ein Begrenzungselement des Führungskanals (3) ist.

9. Das Verfahren nach Anspruch 1, wobei der Transport der Nachladepanzerung (4) mit dem Stecker (8) am Steckerschaft (11) und Entladen des Steckers (8) durch einen Ladekran und einen Hubbalken erfolgt.

10. Das Verfahren nach Anspruch 1, wobei nach dem Transport der Nachladepanzerung (4) mit dem Stecker (8) zum Steckerschaft (11) und Entladen des Steckers (8), die Nachladepanzerung (4) zu einem Aufbewahrungsort derselben transportiert wird, und der Führungskanal (3) entfernt wird.

11. Das Verfahren nach Anspruch 1, wobei nach dem Bewegen des automatischen Griffs (9) der Nachladepanzerung (4) zusammen mit dem abnehmbaren Block (10) auf die höchste Stufe davon in der Nachladepanzerung (4), der Kabelreduzierungskasten (1) und die Dämpfer der Nachladepanzerung (4) geschlossen und abgedichtet werden.

## Revendications

1. Procédé pour extraire un bouchon (8) et un bloc extractible (10) lors du rechargement d'un réacteur nucléaire avec un caloporteur à base de métal lourd liquide, comprenant les étapes consistant en :
l'installation d'un dispositif de transport de bouchon (5) comprenant un anneau support avec des saillies sur le bouchon (8),
l'installation d'une charge supplémentaire (2) sur le dispositif de transport de bouchon (5),
l'installation et la fixation d'un cadre intérieur d'une boîte de démultiplication à câble (1) ayant des vis de fixation sur un couvercle d'un monobloc de réacteur,
la rotation de l'anneau support du dispositif de transport du bouchon (5) dans une position dans laquelle les saillies pénètrent dans une zone de travail des vis de fixation de la boîte de démultiplication à câble (1),
le démontage de la charge supplémentaire (2),
l'installation d'une partie extérieure de la boîte de démultiplication à câble (1) sur le monobloc de réacteur,
le remplacement d'un milieu interne d'une cavité intérieure de la boîte de démultiplication à câble (1),
l'installation d'un canal de guidage (3) sur la boîte de démultiplication à câble (1),
l'installation d'un blindage de rechargement (4) ayant des clapets sur le canal de guidage (3),
le remplacement du milieu interne du blindage de rechargement (4) et du canal de guidage (3),
le déplacement du dispositif de transport de bouchon (5) avec le bouchon (8) dans le blindage de rechargement (4),
le transport du blindage de rechargement (4) avec le bouchon (8) dans un puits de bouchon (11) où le bouchon (8) est déchargé,
la réinstallation du canal de guidage (3) sur la boîte de démultiplication à câble (1),
l'installation du blindage de rechargement (4) avec un dispositif de transport de bloc extractible (6) sur le canal de guidage (3),
le remplacement du milieu interne de la cavité intérieure de la boîte de démultiplication à câble (1) et d'une cavité intérieure du blindage de rechargement (4),
l'abaissement d'une prise automatique (9) du blindage de rechargement (4) pour l'accouplement avec le bloc extractible (10),
le déplacement du dispositif de transport de bloc extractible (6) avec le bloc extractible (10) dans la position la plus haute dans le blindage de rechargement (4),
le transport du blindage de rechargement (4) avec le bloc extractible (10) vers un puits (12) pour le démontage du bloc extractible, et
le déchargement du bloc extractible (10).

2. Procédé selon la revendication 1, comprenant en outre le démontage d'une bride de pression après l'installation et la fixation de la charge supplémentaire (2) sur le dispositif de transport de bouchon (5).

3. Procédé selon la revendication 1, comprenant en outre l'étanchéification entre le canal de guidage (3) et la boîte de démultiplication à câble (1) par un élément d'étanchéité.

4. Procédé selon la revendication 1, dans lequel le remplacement du milieu interne de la cavité intérieure de la boîte de démultiplication à câble (1) est effectué en vérifiant l'étanchéité de la cavité intérieure de la boîte de démultiplication à câble (1) avec une surpression, puis en retirant un mélange gaz-air de la cavité intérieure de la boîte de démultiplication à câble (1) dans une ventilation sous contrôle d'un milieu gazeux, puis en remplissant la cavité intérieure de la boîte de démultiplication à câble (1) avec un gaz inerte.

5. Procédé selon la revendication 1, dans lequel le blindage de rechargement (4) est installé sur une surface support supérieure du canal de guidage (3) fixée sur un plafond d'un hall central d'un atelier de réacteur.

6. Procédé selon la revendication 1, dans lequel le remplacement du milieu interne du blindage de rechargement (4) et du canal de guidage (3) est effectué en vérifiant l'étanchéité de la cavité intérieure du blindage de rechargement (4) et d'une cavité du canal de guidage (3) avec une surpression, puis en retirant un mélange gaz-air de la cavité du blindage de rechargement (4) et de la cavité du canal de guidage (3) dans une ventilation sous contrôle d'un milieu gazeux, puis en remplissant la cavité du blindage de rechargement (4) et la cavité du canal de guidage (3) avec un gaz inerte

7. Procédé selon la revendication 1, dans lequel le déplacement du dispositif de transport de bouchon (5) avec le bouchon (8) dans le blindage de rechargement (4) est effectué en déplaçant le dispositif de transport de bouchon (5) avec le bouchon (8) vers une position supérieure par un entraînement de mouvement des vis de fixation de la boîte de démultiplication à câble (1), puis en abaissant la prise automatique (9) du blindage de rechargement (4) et en réalisant le couplage de la prise automatique (9) du blindage de rechargement (4) avec le dispositif de transport de bouchon (5), en déplaçant la prise automatique (9) du blindage de rechargement (4) avec le bouchon (8) dans la position la plus haute, et en fermant et scellant les clapets du blindage de rechargement (4) et la boîte de réduction du câble (1).

8. Procédé selon la revendication 7, dans lequel l'abaissement de la prise automatique (9) du blindage de rechargement (4) est réalisé jusqu'à ce qu'elle s'arrête contre un élément limiteur du canal de guidage (3).

9. Procédé selon la revendication 1, dans lequel le transport du blindage de rechargement (4) avec le bouchon (8) vers le puits de bouchon (11) et le déchargement du bouchon (8) sont effectués par une grue de chargement et un palonnier.

10. Procédé selon la revendication 1, dans lequel, après le transport du blindage de rechargement (4) avec le bouchon (8) vers le puits de bouchon (11) et le déchargement du bouchon (8), le blindage de rechargement (4) est transporté vers un lieu de stockage de celui-ci, et le canal de guidage (3) est enlevé.

11. Procédé selon la revendication 1, dans lequel, après avoir déplacé la prise automatique (9) du blindage de rechargement (4) avec le bloc extractible (10) jusqu'à la position la plus haute dans le blindage de rechargement (4), la boîte de démultiplication à câble (1) et les clapets du blindage de rechargement (4) sont fermés et scellés.
